# EUROPEAN PATENT APPLICATION

(11) **EP 3 979 440 A1**
(43) Date of publication of application: **06.04.2022**
(21) Application number: 20831724.8
(22) Date of filing: 15.06.2020
(51) Int. Cl.: H01S 5/042, G06T 7/00, H04M 1/725

(54) **ADJUSTMENT METHOD, ADJUSTMENT APPARATUS, TERMINAL AND COMPUTER-READABLE STORAGE MEDIUM**

(30) Priority: 27.06.2019 CN 201910564991
(71) Applicant: GUANGDONG OPPO MOBILE TELECOMMUNICATIONS CORP., LTD., Wusha, Chang'an Dongguan Guangdong 523860 (CN)
(72) Inventor: LYU, Xiangnan, Dongguan, Guangdong 523860 (CN)
(74) Representative: Manitz Finsterwald Patent- und Rechtsanwaltspartnerschaft mbB
(86) International application number: PCT/CN2020/096080
(87) International publication number: WO 2020/259334

(57) **Abstract**

Disclosed are an adjustment method, an adjustment apparatus (40), a terminal (10) and a computer-readable storage medium (200). The adjustment method comprises: (301) emitting a laser with a predetermined first pulse width to a target object; (302) receiving the laser, reflected by the target object, with the first pulse width to generate an infrared image; (303) determining, according to the infrared image, whether the distance to the target object is less than a safety distance; and (304) if so, emitting a laser with a predetermined second pulse width to the target object, wherein the second pulse width is less than the first pulse width.

## Description

### CROSS-REFERENCE TO RELATED APPLICATION

The disclosure claims the priority to and benefits of Chinese Patent Application No. 201910564991.9 filed to China National Intellectual Property Administration on June 27, 2019, the entire content of which is incorporated herein by reference.

### TECHNICAL FIELD

The disclosure relates to the field of three-dimensional imaging technologies, and particularly to an adjustment method, an adjustment apparatus, a terminal and a computer-readable storage medium.

### BACKGROUND

A depth camera may be provided on an electronic device such as a mobile phone to acquire a depth of a target object. In detail, the depth camera is controlled to emit a laser to the target object and to receive a laser reflected by the target object, and a depth image of the target object may be acquired by comparing the received laser pattern with a reference pattern.

### SUMMARY

The embodiments of the disclosure provide an adjustment method, an adjustment apparatus, a terminal and a computer-readable storage medium.

The adjustment method in the embodiments of the disclosure includes: emitting a predetermined laser with a first pulse width to a target object; receiving the laser with the first pulse width, reflected by the target object, to generate an infrared image; determining whether a distance to the target object is less than a safety distance based on the infrared image; and emitting a predetermined laser with a second pulse width to the target object in response to the distance to the target object being less than the safety distance, the second pulse width being less than the first pulse width.

The adjustment apparatus in the embodiments of the disclosure includes a first emitting module, a receiving module, a determining module and a second emitting module. The first emitting module is configured to emit a predetermined laser with a first pulse width to a target object; the receiving module is configured to receive the laser with the first pulse width, reflected by the target object, to generate an infrared image; the determining module is configured to determine whether a distance to the target object is less than a safety distance based on the infrared image; and the second emitting module is configured to emit a predetermined laser with a second pulse width to the target object in response to the distance to the target object being less than the safety distance, the second pulse width being less than the first pulse width.

The terminal in the embodiments of the disclosure includes a depth camera and a processor. The depth camera includes a light emitter and a light receiver. The light emitter is configured to emit a predetermined laser with a first pulse width to a target object; the light receiver is configured to receive the laser with the first pulse width, reflected by the target object, to generate an infrared image; and the processor is configured to determine whether a distance to the target object is less than a safety distance based on the infrared image and control the light emitter to emit a predetermined laser with a second pulse width to the target obj ect in response to the distance to the target object being less than the safety distance, the second pulse width being less than the first pulse width.

The non-transitory computer-readable storage medium including computer-readable instructions in the embodiments of the disclosure. A processor is caused to execute the adjustment method in the embodiments of the disclosure in response to the computer-readable instructions are executed by the processor. The adjustment method includes: emitting a predetermined laser with a first pulse width to a target object; receiving the laser with the first pulse width, reflected by the target object, to generate an infrared image; determining whether a distance to the target object is less than a safety distance based on the infrared image; and emitting a predetermined laser with a second pulse width to the target object in response to the distance to the target object being less than the safety distance, the second pulse width being less than the first pulse width.

The adjustment method, the adjustment apparatus, the terminal and the computer-readable storage medium in the embodiments of the disclosure exactly determine whether the target object (such as human eyes) is too close to a laser source by acquiring the infrared image of the target object and determining whether the distance to the target object is less than the safety distance based on the infrared image and reduce the pulse width to the second pulse width less than the first pulse width in response to the distance is too close (less than the safety distance), so that the laser energy is reduced to prevent the laser from damaging human eyes. Not only the safety risk of human eyes may be reduced to ensure the use safety of the depth camera, but also the power consumption may be reduced after the pulse width is reduced.

Additional aspects and advantages of embodiments of the disclosure will be given in part in the following descriptions, become apparent in part from the following descriptions, or be learned from the practice of the embodiments of the present disclosure.

### BRIEF DESCRIPTION OF THE DRAWINGS

These and/or other aspects and advantages of embodiments of the disclosure will become apparent and more readily from the following descriptions made with reference to the drawings, in which:
FIG. 1 is a schematic diagram illustrating a structure of a terminal according to embodiments of the disclosure;
FIG. 2 is a schematic diagram illustrating a system structure of a terminal according to embodiments of the disclosure;
FIG. 3 is a flowchart illustrating an adjustment method according to embodiments of the disclosure;
FIG. 4 is a block diagram illustrating an adjustment apparatus according to embodiments of the disclosure;
FIG. 5 is a pulse schematic diagram of a laser emitted by a terminal according to embodiments of the disclosure;
FIG. 6A and FIG. 6B are flowcharts illustrating an adjustment method according to embodiments of the disclosure;
FIG. 7A and FIG. 7B are block diagrams illustrating an adjustment apparatus according to embodiments of the disclosure;
FIGS. 8 to 10 are schematic diagrams illustrating a scene of an adjustment method according to embodiments of the disclosure;
FIG. 11 is a flowchart illustrating an adjustment method according to embodiments of the disclosure;
FIG. 12 is a block diagram illustrating an adjustment apparatus according to embodiments of the disclosure;
FIG. 13A and FIG. 13B are flowcharts illustrating an adjustment method according to embodiments of the disclosure;
FIG. 14A and FIG. 14B are block diagrams illustrating an adjustment apparatus according to embodiments of the disclosure;
FIG. 15 is a schematic diagram illustrating a scene of an adjustment method according to embodiments of the disclosure;
FIG. 16 is a schematic diagram of a principle of acquiring by a terminal a depth image according to embodiments of the disclosure; and
FIG. 17 is a diagram of interaction between a non-temporary computer-readable storage medium and a processor according to embodiments of the disclosure.

### DETAILED DESCRIPTION

Embodiments of the disclosure are further described in combination with the accompanying drawings. The same or similar signs in the drawings represent the same or similar elements or elements with the same or similar functions throughout the descriptions.

In addition, the embodiments described herein with reference to the drawings are explanatory, illustrative, and used to explain the embodiments of the disclosure and are not to be construed as a limitation of the disclosure.

In the disclosure, a first feature is "on" or "below" a second feature, which may include that the first feature directly contacts the second feature or the first feature contacts the second feature through an intermediate medium, unless expressly specified and defined otherwise. Furthermore, the first feature "on," "above," or "on top of' the second feature may include that the first feature is right "on," "above," or "on top of' the second feature or the first feature is not right "on," "above," or "on top of' the second feature or just means that the first feature is at a height higher than that of the second feature. While the first feature "beneath," "below," or "on bottom of' the second feature may include that the first feature is right "beneath," "below," or "on bottom of' the second feature or the first feature is not right "beneath," "below," or "on bottom of' the second feature or just means that the first feature is at a height lower than that of the second feature.

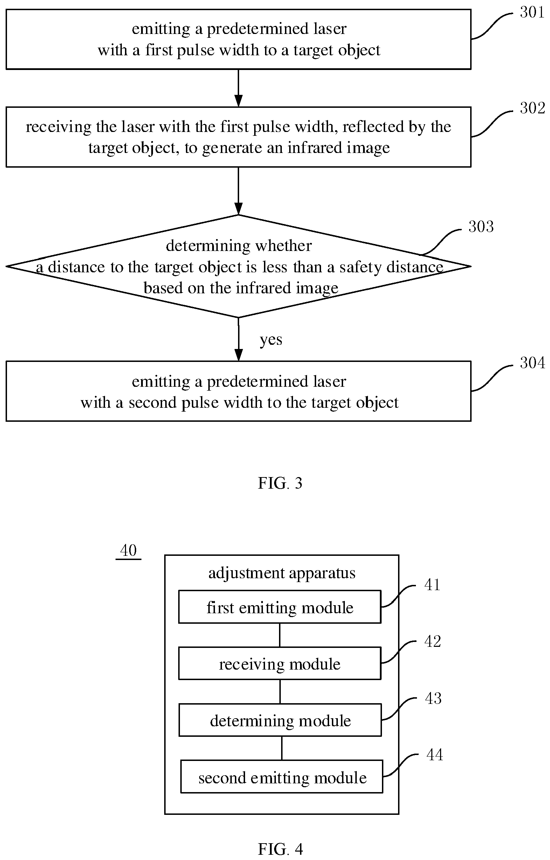

With reference to FIG. 3, the adjustment method in embodiments of the disclosure may be applicable to a terminal 10 in embodiments of the disclosure. The adjustment method includes: emitting a predetermined laser with a first pulse width to a target object; receiving the laser with the first pulse width, reflected by the target object, to generate an infrared image; determining whether a distance to the target object is less than a safety distance based on the infrared image; and if yes, emitting a predetermined laser with a second pulse width to the target object, in which the second pulse width is less than the first pulse width.

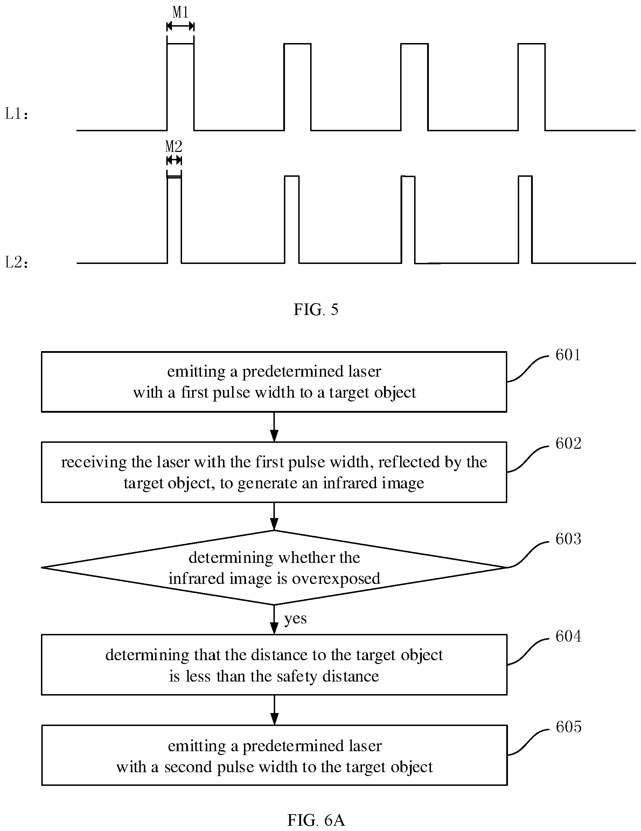

With reference to FIG. 6A, in some embodiments, the adjustment method in the disclosure further includes: determining whether the infrared image is overexposed; and determining that the distance to the target object is less than the safety distance in response to the infrared image being overexposed.

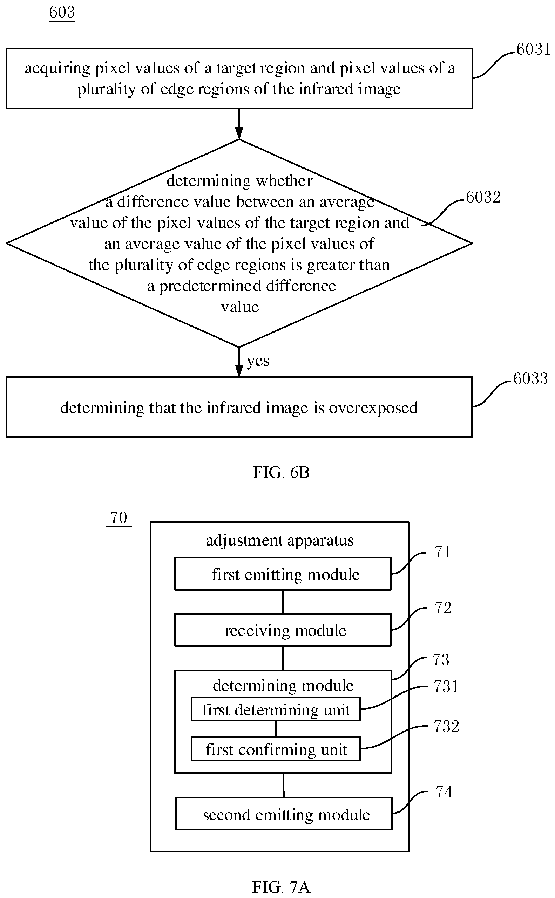

With reference to FIG. 6A and FIG. 6B, determining whether the infrared image is overexposed, includes: acquiring pixel values of a target region O and pixel values of a plurality of edge regions Pn of the infrared image L; determining whether a difference value between an average value of the pixel values of the target region O and an average value of the pixel values of the plurality of edge regions Pn is greater than a predetermined difference value; and if yes, determining that the infrared image L is overexposed.

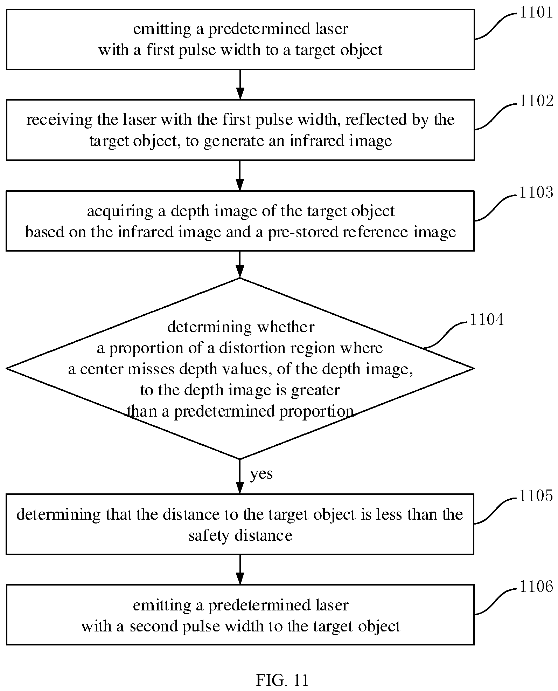

With reference to FIG. 11, determining whether the distance to the target object is less than the safety distance based on the infrared image, includes: acquiring a depth image of the target object based on the infrared image and a pre-stored reference image; determining whether a proportion of a distortion region where a center misses depth values, of the depth image, to the depth image is greater than a predetermined proportion; and determining that the distance to the target object is less than the safety distance in response to the proportion of the distortion region to the depth image being greater than the predetermined proportion.

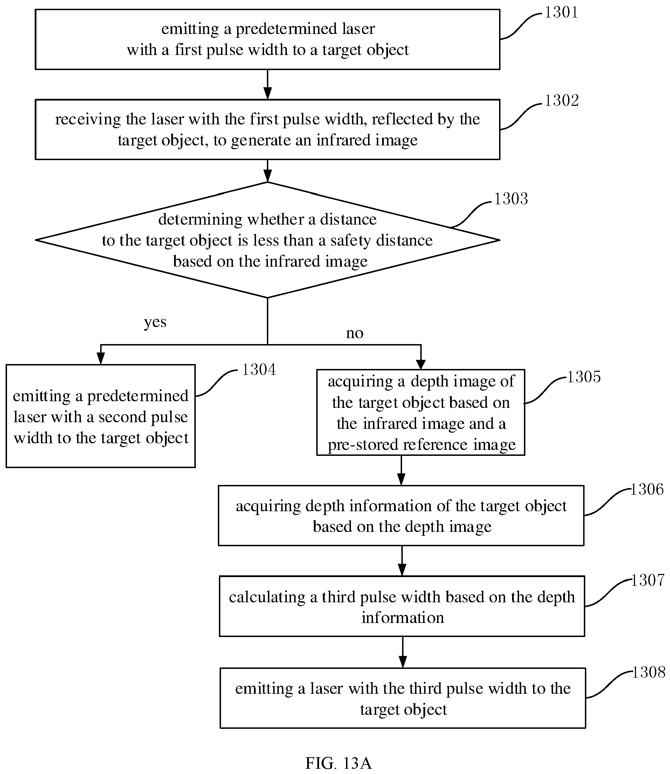

With reference to FIG. 13A, in some embodiments, the adjustment method further includes: acquiring a depth image of the target object based on the infrared image and a pre-stored reference image in response to the distance to the target object being greater than the safety distance; acquiring depth information of the target object based on the depth image; calculating a third pulse width based on the depth information; and emitting a laser with the third pulse width to the target obj ect.

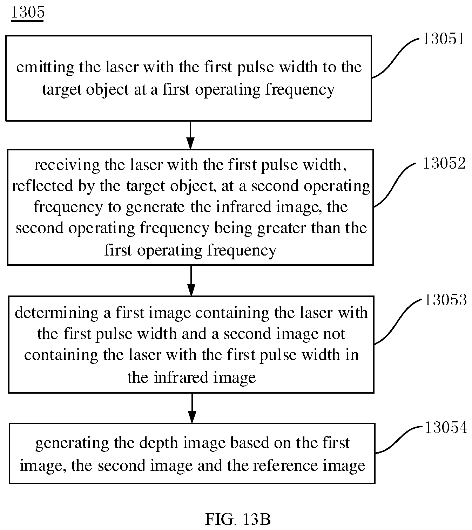

With reference to FIG. 13A and FIG. 13B, in some embodiments, acquiring the depth image of the target object based on the infrared image and the pre-stored reference image, includes: emitting the laser with the first pulse width to the target object at a first operating frequency; receiving the laser with the first pulse width, reflected by the target object, at a second operating frequency to generate the infrared image, the second operating frequency being greater than the first operating frequency; determining a first image containing the laser with the first pulse width and a second image not containing the laser with the first pulse width in the infrared image; and generating the depth image based on the first image, the second image and the reference image.

With reference to FIG. 3 and FIG. 4, the adjustment apparatus 40 according to embodiments of the disclosure includes a first emitting module 41, a receiving module 42, a determining module 43 and a second emitting module 44. The first emitting module 41 is configured to emit a predetermined laser with a first pulse width to a target object; the receiving module 42 is configured to receive the laser with the first pulse width, reflected by the target object, to generate an infrared image; the determining module 43 is configured to determine whether a distance to the target object is less than a safety distance based on the infrared image; and the second emitting module 44 is configured to emit a predetermined laser with a second pulse width to the target object in response to the distance to the target object being less than the safety distance, the second pulse width being less than the first pulse width.

With reference to FIG. 6A and FIG. 7A, in some embodiments, the determining module 73 includes a first determining unit 731 and a first confirming unit 732. The first determining unit 731 is configured to determine whether the infrared image is overexposed and the first confirming unit 732 is configured to determine that the distance to the target object is less than the safety distance in response to the infrared image being overexposed.

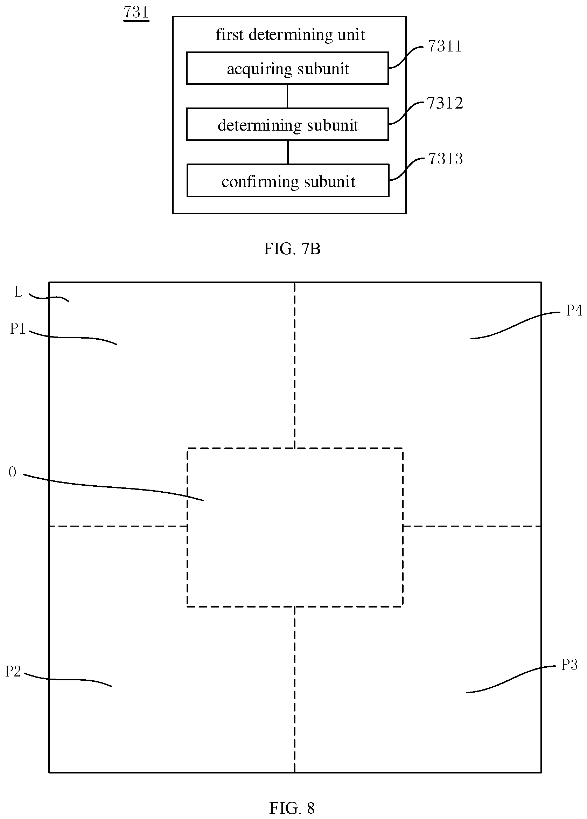

With reference to FIG. 6B and FIG. 7B, in some embodiments, the first determining unit 731 includes an acquiring subunit 7311, a determining subunit 7312 and a confirming subunit 7313. The first acquiring subunit 7311 is configured to acquire pixel values of a target region O and pixel values of a plurality of edge regions Pn of the infrared image L; the determining subunit 7312 is configured to determine whether a difference value between an average value of the pixel values of the target region O and an average value of the pixel values of the plurality of edge regions Pn is greater than a predetermined difference value; and the confirming subunit 7313 is configured to determine that the infrared image L is overexposed in response to the difference value between the average value of the pixel values of the target region O and the average value of the pixel values of the plurality of edge regions Pn being greater than the predetermined difference value.

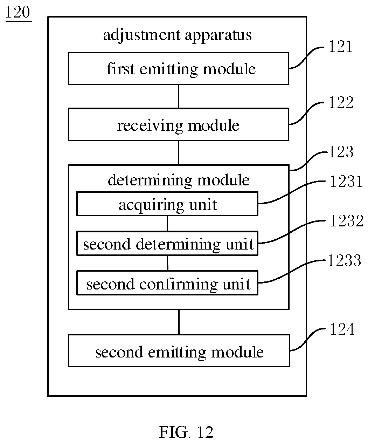

With reference to FIG. 11 and FIG. 12, in some embodiments, the determining module 123 includes an acquiring unit 1231, a second determining unit 1232 and a second confirming unit 1233. The first acquiring unit 1231 is configured to acquire a depth image of the target object based on the infrared image and a pre-stored reference image, the second determining unit 1232 is configured to determine whether a proportion of a distortion region where a center misses depth values, of the depth image, to the depth image is greater than a predetermined proportion, and the second confirming unit 1233 is configured to determine that the distance to the target object is less than the safety distance in response to the proportion of the distortion region to the depth image being greater than the predetermined proportion.

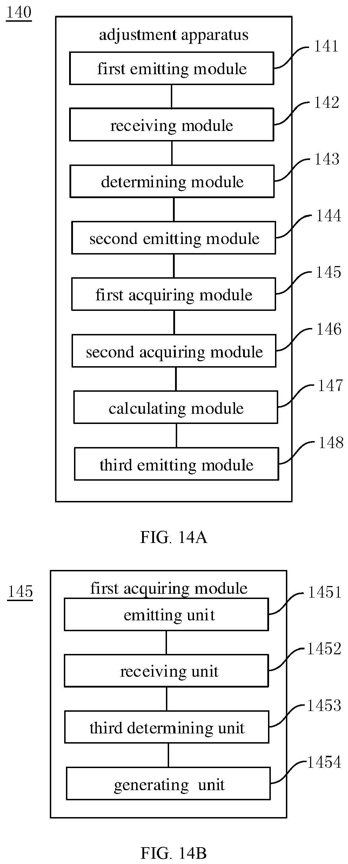

With reference to FIG. 13A and FIG. 14A, in some embodiments, the adjustment apparatus 140 further includes a first acquiring module 145, a second acquiring module 146, a calculating module 147 and a third emitting module 148. The first acquiring module 145 is configured to acquire a depth image of the target object based on the infrared image and a pre-stored reference image in response to the distance to the target object being greater than the safety distance. The second acquiring module 146 is configured to acquire depth information of the target object based on the depth image. The calculating module 147 is configured to calculate a third pulse width based on the depth information. The third emitting module 148 is configured to emit a laser with the third pulse width to the target object.

With reference to FIG. 13B and FIG. 14B, in some embodiments, the first acquiring module 145 includes an emitting unit 1451, a receiving unit 1452, a third determining unit 1453 and a generating unit 1454. The emitting unit 1451 is configured to emit the laser with the first pulse width to the target object at a first operating frequency. The receiving unit 1452 is configured to receive the laser with the first pulse width, reflected by the target object, at a second operating frequency to generate the infrared image, the second operating frequency being greater than the first operating frequency. The third determining unit 1453 is configured to determine a first image containing the laser with the first pulse width and a second image not containing the laser with the first pulse width in the infrared image. The generating unit 1454 is configured to generate the depth image based on the first image, the second image and the reference image.

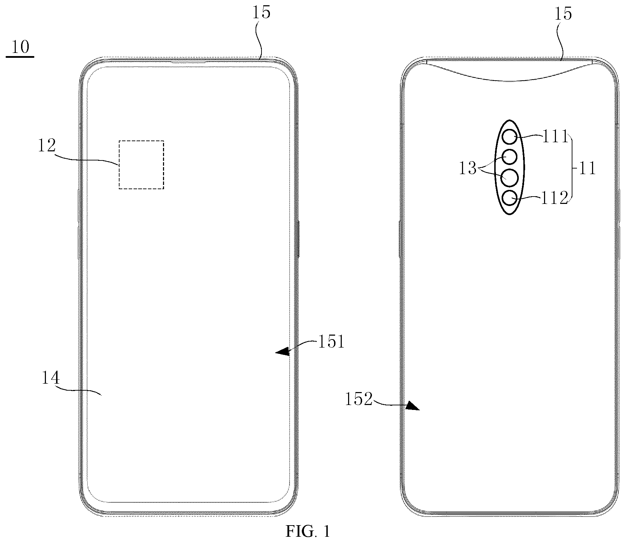

With reference to FIG. 1 and FIG. 3, the terminal 10 according to embodiments of the disclosure includes a depth camera 11 and a processor 12. The depth camera 11 includes a light emitter 111 and a light receiver 112. The light emitter 111 is configured to emit a predetermined laser with a first pulse width to a target object; the light receiver 112 is configured to receive the laser with the first pulse width, reflected by the target object, to generate an infrared image; and the processor 12 is configured to determine whether a distance to the target object is less than a safety distance based on the infrared image, and control the light emitter 111 to emit a predetermined laser with a second pulse width to the target object in response to the distance to the target object being less than the safety distance, the second pulse width being less than the first pulse width.

With reference to FIG. 1 and FIG. 6A, in some embodiments, the processor 12 is further configured to determine whether the infrared image is overexposed; and determine that the distance to the target object is less than the safety distance in response to the infrared image being overexposed.

With reference to FIG. 1, FIG. 6B and FIG. 8, in some embodiments, the processor 12 is further configured to acquire pixel values of a target region O and pixel values of a plurality of edge regions Pn of the infrared image L; determine whether a difference value between an average value of the pixel values of the target region O and an average value of the pixel values of the plurality of edge regions Pn is greater than a predetermined difference value; and if yes, determine that the infrared image L is overexposed.

With reference to FIG. 1 and FIG. 11, in some embodiments, the processor 12 is further configured to acquire a depth image of the target object based on the infrared image and a pre-stored reference image; determine whether a proportion of a distortion region where a center misses depth values, of the depth image, to the depth image is greater than a predetermined proportion; and determine that the distance to the target object is less than the safety distance in response to the proportion of the distortion region to the depth image being greater than the predetermined proportion.

With reference to FIG. 1 and FIG. 13A, in some embodiments, the processor 12 is further configured to acquire a depth image of the target object based on the infrared image and a pre-stored reference image in response to the distance to the target object being greater than the safety distance; acquire depth information of the target object based on the depth image; and calculate a third pulse width based on the depth information; and the light emitter 111 is further configured to emit a laser with the third pulse width to the target object.

With reference to FIG. 1 and FIG. 13B, in some embodiments, the light emitter 111 is further configured to emit the laser with the first pulse width to the target object at a first operating frequency; the light receiver 112 is further configured to receive the laser with the first pulse width, reflected by the target object, at a second operating frequency to generate the infrared image, the second operating frequency being greater than the first operating frequency; and the processor 12 is further configured to determine a first image containing the laser with the first pulse width and a second image not containing the laser with the first pulse width in the infrared image and generate a depth image based on the first image, the second image and the reference image.

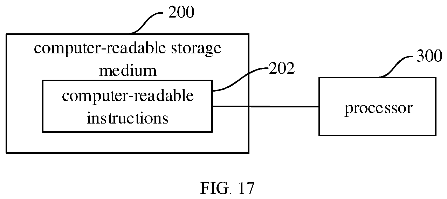

With reference to FIG. 17, embodiments of the disclosure provide a non-temporary computer-readable storage medium 200 including computer-readable instructions 202. When the computer-readable instructions 202 are executed by a processor 300, the processor 300 is caused to execute the adjustment method as described in the any above embodiment.

As illustrated in FIG. 1, the terminal 10 according to embodiments of the disclosure includes a housing 15, a depth camera 11, a processor 12 and a display screen 14. The terminal 10 may be a mobile phone, a tablet computer, a laptop, a smart watch, etc. The terminal 10 being the mobile phone is taken as an example in the disclosure for description. It should be understood that the terminal is not limited to the mobile phone.

The depth camera 11 and the processor 12 may be mounted on the housing 15. The housing 15 includes a front side 151 and a rear side 152 and the front side 151 is opposite to the rear side152. The front side 151 may be further configured to mount the display screen 14. The display screen 14 may be configured to display information such as images, text. The depth camera 11 may be mounted on the front side 151 to facilitate selfie or video call, etc. The depth camera 11 may also be mounted on the rear side 152 to facilitate photographing scenery and other persons. In addition, the depth cameras 11 may be mounted on the front side 151 and the rear side 152 independently.

The depth camera 11 includes a light emitter 111 and a light receiver 112. The light emitter 111 of the depth camera 11 may emit a laser, such as an infrared laser. The laser is reflected after reaching an object in the scene. The reflected laser may be received by the light receiver 112. The processor 12 may calculate depth information of the object based on the laser emitted by the light emitter 111 and the laser received by the light receiver 112. In one example, the depth camera 11 may acquire depth information by a time of flight (TOF) ranging method. In another example, the depth camera 11 may acquire depth information based on a structured light ranging principle. In the disclosure, depth information is acquired by the depth camera 11 based on a structured light ranging principle as an example for description.

In the example as illustrated in FIG. 1, the depth camera 11 is mounted on the rear side 152 of the housing 15. It may be understood that the depth camera 11 (the rear depth camera 11) mounted on the rear side 152 needs to meet the normal use of the distant object to be photographed. Therefore, the optical power of the laser needing to be emitted by the light emitter 111 needs to be set larger, so as to meet the accuracy of acquiring depth information. However, the rear depth camera 11 is also required to photograph a closer object or person, and when the distance is relatively close, the laser with the large optical power may easily cause damage to the person. Therefore, for the rear depth camera 11, it is particularly important and difficult to ensure the use safety of the depth camera 11.

The terminal 10 may further include a visible light camera 13. In detail, the visible light camera 13 may include a long-focus camera and a wide-angle camera, or the visible light camera 13 includes a long-focus camera, a wide-angle camera and a periscope camera. The visible light camera 13 may be arranged close to the depth camera 11, for example, the visible light camera 13 may be arranged between the light emitter 111 and the light receiver 112, so that there is a relatively long distance between the light emitter 111 and the light receiver 112, thereby increasing the base line length of the depth camera 11 and improving the accuracy of the acquired depth information.

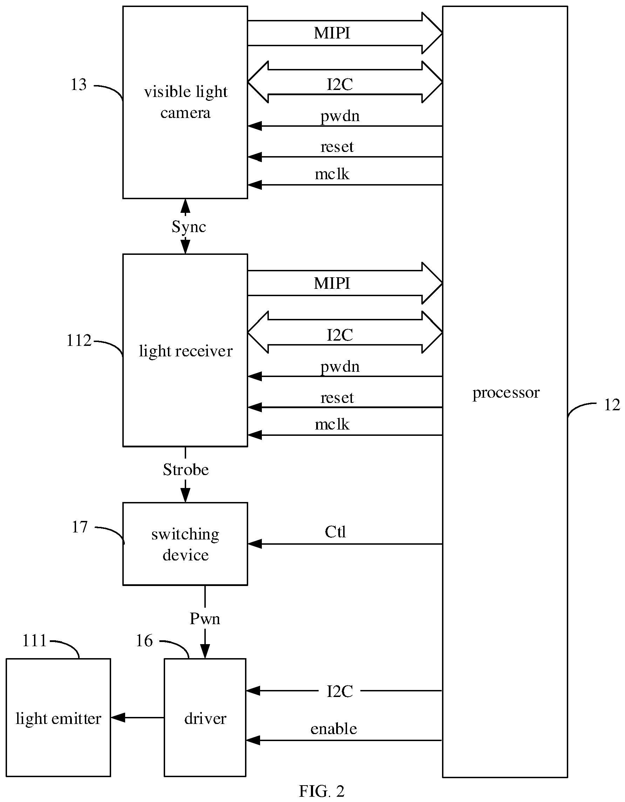

In combination with FIG. 2, the light emitter 111 and the light receiver 112 are coupled to the processor 12. The processor 12 may provide an enable signal for the light emitter 111. In detail, the processor 12 may provide an enable signal for a driver 16 and the driver 16 is configured to drive the light emitter 111 to emit a laser. The light receiver 112 is coupled to the processor 12 via an I2C bus. When the light receiver 112 is used cooperatively with the light emitter 111, in one example, the light receiver 112 may control the projection timing of the light emitter 111 by a strobe signal, in which the strobe signal is generated based on the timing of acquiring images by the light receiver 112 and the strobe signal may be regarded as an electric signal with alternate high and low levels. The light emitter 111 projects the laser based on the laser projection timing indicated by the strobe signal. In detail, the processor 12 may send an image acquisition instruction via the I2C bus to enable the depth camera 11 to work. After the light receiver 112 receives the image acquisition instruction, a switching device 17 is controlled by the strobe signal. When the strobe signal is the high level, the switching device 17 sends a pulse signal (pwn) to the driver 16 and the driver 16 drives the light emitter 111 to project the laser to the scene based on the pulse signal, and when the strobe signal is the low level, the switching device 17 stops sending the pulse signal to the driver 16 and the light emitter 111 does not project the laser. Or, when the strobe signal is the low level, the switching device 17 sends a pulse signal to the driver 16 and the driver 16 drives the light emitter 111 to project the laser to the scene based on the pulse signal, and when the strobe signal is the high level, the switching device 17 stops sending the pulse signal to the driver 16 and the light emitter 111 does not project the laser.

In another example, when the light receiver 112 is used cooperatively with the light emitter 111, the strobe signal is not needed. At this time, the processor 12 sends an image acquisition instruction to the light receiver 112 and simultaneously sends a laser projection instruction to the driver 16. After receiving the image acquisition instruction, the light receiver 112 starts to acquire images. When receiving the laser projection instruction, the driver 16 drives the light emitter 111 to project the laser. When the light emitter 111 projects the laser, a laser pattern with speckles, formed by the laser, is projected to an object in the scene. The light receiver 112 acquires the laser pattern reflected by the object to acquire a speckle image and sends the speckle image to the processor 12 through a mobile industry processor interface (MIPI). Each time the light receiver 112 sends one frame of speckle image to the processor 12, the processor 12 may receive one data stream. The processor 12 may calculate depth information based on the speckle image and the reference image pre-stored in the processor 12. However, the depth camera generally emits a laser with a wave length of 940nm. When the depth camera is too close to human eyes, the laser with the wave length of 940nm may cause damages to retina, which exists risks to the safety of human eyes.

As illustrated in FIG. 3, the adjustment method in embodiments of the disclosure may be applicable to the terminal 10 in embodiments of the disclosure. The adjustment method includes the following.

At 301, a predetermined laser with a first pulse width is emitted to a target object.

At 302, the laser with the first pulse width, reflected by the target object, is received to generate an infrared image.

At 303, it is determined whether a distance to the target object is less than a safety distance based on the infrared image.

At 304, if yes, a predetermined laser with a second pulse width is emitted to the target object, in which the second pulse width is less than the first pulse width.

As illustrated in FIG. 3 and FIG. 4, the adjustment apparatus 40 according to embodiments of the disclosure includes a first emitting module 41, a receiving module 42, a determining module 43 and a second emitting module 44. The first emitting module 41 is configured to emit a predetermined laser with a first pulse width to a target object; the receiving module 42 is configured to receive the laser with the first pulse width, reflected by the target object, to generate an infrared image; the determining module 43 is configured to determine whether a distance to the target object is less than a safety distance based on the infrared image; and the second emitting module 44 is configured to emit a predetermined laser with a second pulse width to the target object in response to the distance to the target object being less than the safety distance, in which the second pulse width is less than the first pulse width. That is, 301 may be implemented by the first emitting module 41, 302 may be implemented by the receiving module 42, 303 may be implemented by the determining module 43, and 304 may be implemented by the second emitting module 44.

As illustrated in FIGS. 1 to 3, the light emitter 111 in the embodiments is configured to emit a predetermined laser with a first pulse width to a target object; the light receiver 112 is configured to receive the laser with the first pulse width, reflected by the target object, to generate an infrared image; and the processor 12 is configured to determine whether a distance to the target object is less than a safety distance based on the infrared image, and control the light emitter 111 to emit a predetermined laser with a second pulse width to the target object in response to the distance to the target object being less than the safety distance, in which the second pulse width is less than the first pulse width. That is, 301 may be implemented by the light emitter 111, 302 may be implemented by the light receiver 112, and 303 and 304 may be implemented by the processor 12.

In detail, the processor 12 may send a laser projection instruction to the light emitter 111. The laser projection instruction may include one pulse control signal. Correspondingly, the light emitter 111 emits one frame of the laser with the first pulse width to the target object. Or, the laser projection instruction may include a plurality of pulse control signals. Correspondingly, the light emitter 111 emits a plurality of frames of lasers with the first pulse width to the target object.

The processor 12 may send an image acquisition instruction to the light receiver 112. The light receiver 112 starts to acquire images after receiving the image acquisition instruction, receives the laser with the first pulse width reflected by the target object to generate the infrared image and sends the infrared image to the processor 12 through the MIPI. In the embodiments, the laser emitted by the light emitter 111 has a specified pattern (for example, a speckle pattern) and the light receiver 112 receives a speckle pattern reflected by the target object to form an infrared image containing speckles. The processor 12 may determine whether the distance to the target object is less than the safety distance based on the infrared image. The distance to the target object may be the minimum distance among all distances between different positions of the target object and the light emitter 111; or, the distance to the target object may be an average distance of all distances between different positions of the target object and the light emitter 111.

In one example, the processor 12 may determine whether the infrared image is overexposed. When the infrared image is overexposed, it indicates that the target object is too close, resulting in most of the laser emitted by the light emitter 111 being reflected by the target object and received by the light receiver 112. The light receiver 112 receives the excessive laser, resulting in the infrared image being overexposed. The processor 12 may determine whether the distance to the target object is less than the safety distance based on whether the infrared image is overexposed. Or, in another example, the processor 12 compares based on the infrared image and a pre-stored reference image to calculate a depth image. The depth image contains depth information. For example, the depth image includes a plurality of pixels and a pixel value of each pixel is a depth of a current scene corresponding to the pixel. For example, if the pixel value of a certain pixel is 20 and this pixel is corresponding to an A point in the scene, the pixel value 20 is that a distance between the point A in the scene and the depth camera is 20 is 20. It may be understood that the smaller the pixel value is, the smaller the distance between the corresponding position of the current scene and the depth camera 11 is. The processor 12 may first recognize a region located by the target object in the depth image and use the depth corresponding to the average value of the pixel values in the region located by the target object as the distance to the target object, or the processor 12 may use the minimum pixel value in the region located by the target object as the distance to the target object, thereby exactly determining whether the distance to the target object is less than the safety distance.

When the distance to the target object is less than the safety distance, the processor 12 sends an image acquisition instruction containing predetermined second pulse width information to the light emitter 111 to control the light emitter 111 to emit the laser with the second pulse width to the target object, in which the second pulse width is less than the first pulse width. The safety distance may be set based on relevant safety standards and user attributes, for example, it may be set based on the maximum value of the laser energy that may be borne by user's eyes in unit time, the target person groups of the terminal 10, and the target scenes of the terminal 10, etc. The safety distance may be set to any distance such as 100 mm, 200 mm, 250 mm, 1000 mm, which is not limited herein.

In combination with FIG. 5, a waveform of the laser with the first pulse width M1 that the processor 12 controls the light emitter 111 to emit by default is as illustrated as L1, in which the high level represents that the light emitter 111 is emitting the laser and the low level represents that the light emitter 111 is not emitting the laser. As illustrated in FIG. 5, L2 is a waveform of the laser with the second pulse width M2 that the processor 12 controls the light emitter 111 to emit. The second pulse width M2 may be less than the first pulse width M1. For example, the second pulse width M2 is 1/2, 2/3, 1/3, etc. of the first pulse width M1 and the embodiments are illustrated by taking the second pulse width M2 as 1/2 of the first pulse width M1 as an example. After the pulse width is reduced to the second pulse width M2, the duration of the user being irradiated by the laser in the unit time is reduced, thereby reducing the total amount of the laser received by the user in the unit time and avoiding damage to the user.

In summary, the adjustment method, the adjustment apparatus 20 and the terminal 10 in embodiments of the disclosure exactly determine whether the target object (such as human eyes) is too close to a laser source by acquiring the infrared image of the target object and determining whether the distance to the target object is less than the safety distance based on the infrared image, and reduce the pulse width to the second pulse width M2 less than the first pulse width M1 in response to the distance is too close (less than the safety distance), so that the laser energy is reduced to prevent the laser from damaging human eyes. Not only the safety risk of human eyes may be reduced to ensure the use safety of the depth camera, but also the power consumption may be reduced after the pulse width is reduced. Meanwhile, since the user's use distance is detected in advance by the depth camera 11, no range detection apparatus in addition to the depth camera 11 needs to be additionally added, which reduces the dimension and manufacture cost of the terminal 10.

As illustrated in FIG. 6A, in some embodiments, the adjustment method includes the following.

At 601, a predetermined laser with a first pulse width is emitted to a target object.

At 602, the laser with the first pulse width, reflected by the target object, is received to generate an infrared image.

At 603, it is determined whether the infrared image is overexposed.

At 604, it is determined that the distance to the target object is less than the safety distance in response to the infrared image being overexposed.

At 605, a predetermined laser with a second pulse width is emitted to the target object, in which the second pulse width is less than the first pulse width.

As illustrated in FIG. 6A and FIG. 7A, in some embodiments, the adjustment apparatus 70 according to embodiments of the disclosure includes a first emitting module 71, a receiving module 72, a determining module 73 and a second emitting module 74. The first emitting module 71 is configured to emit a predetermined laser with a first pulse width to a target object. The receiving module 72 is configured to receive the laser with the first pulse width, reflected by the target object, to generate an infrared image. The determining module 73 is configured to determine whether a distance to the target object is less than a safety distance based on the infrared image. In detail, the determining module 73 further includes a first determining unit 731 and a first confirming unit 732. The first determining unit 731 is configured to determine whether the infrared image is overexposed and the first confirming unit 732 is configured to determine that the distance to the target object is less than the safety distance in response to the infrared image being overexposed. The second emitting module 44 is configured to emit a predetermined laser with a second pulse width to the target object in response to the distance to the target object is less than the safety distance, in which the second pulse width is less than the first pulse width. That is, 601 may be implemented by the first emitting module 71, 602 may be implemented by the receiving module 72, 603 may be implemented by the first determining unit 732, 604 may be implemented by the first confirming unit 732, and 605 may be implemented by the second emitting module 74.

As illustrated in FIG. 1 and FIG. 6A, in some embodiments, the processor 12 is further configured to determine whether the infrared image is overexposed; and determine that the distance to the target object is less than the safety distance in response to the infrared image being overexposed. That is, 603 and 604 are sub blocks of determining whether the distance to the target object is less than the safety distance based on the infrared image and may be implemented by the processor 12.

The contents and detailed implementations of 601, 602 and 605 in FIG. 6A may refer to the descriptions of 301, 302 and 304 in the specification, which is not repeated here.

In detail, when the target object is too close to the light emitter 111, most of the laser emitted by the light emitter 111 are reflected by the target object and received by the light receiver 112. The light receiver 112 receives the excessive laser, resulting in the infrared image being overexposed. Therefore, the processor 12 may determine whether the infrared image is overexposed; and determine that the distance to the target object is less than the safety distance in response to the infrared image being overexposed. In an example, the processor 12 acquires pixel values of all pixels in the infrared image, in which the pixel value of the infrared image is generated based on a corresponding voltage generated after the corresponding pixel receives the laser, and the larger the amount of the received laser is, the greater the corresponding pixel value is. The processor 12 determines whether the infrared image is overexposed by: determining whether pixel values of a predetermined proportion (such as 70%) of the pixels are greater than a predetermined pixel value (for example, a predetermined pixel value is 255). When the pixel values of 70% of pixels are greater than 255, it indicates that the target object is too close and the region corresponding to the target object in the infrared image occupies most of the regions in the entire infrared image. Most of the laser emitted by the light emitter 111 are reflected by the target object and received by the light receiver 112, resulting in a large area overexposure of the infrared image. Therefore, the processor 12 may exactly determine whether the infrared image is overexposed, thereby determining that the distance to the target object is less than the safety distance.

As illustrated in FIG. 6A and FIG. 6B, in some implementations, 603: determining whether the infrared image is overexposed, includes the following.

At 6031, pixel values of a target region O and pixel values of a plurality of edge regions Pn of the infrared image L are acquired.

At 6032, it is determined whether a difference value between an average value of the pixel values of the target region O and an average value of the pixel values of the plurality of edge regions Pn is greater than a predetermined difference value.

At 6032, if so, it is determined that the infrared image L is overexposed.

As illustrated in FIG. 6B and FIG. 7B, in some embodiments, the first determining unit 731 includes an acquiring subunit 7311, a determining subunit 7312 and a confirming subunit 7313. The first acquiring subunit 7311 is configured to acquire pixel values of a target region O and pixel values of a plurality of edge regions Pn of the infrared image L; the determining subunit 7312 is configured to determine whether a difference value between an average value of the pixel values of the target region O and an average value of the pixel values of the plurality of edge regions Pn is greater than a predetermined difference value; and the confirming subunit 7313 is configured to determine that the infrared image L is overexposed in response to the difference value between the average value of the pixel values of the target region O and the average value of the pixel values of the plurality of edge regions Pn being greater than the predetermined difference value. That is, 6031 may be implemented by the acquiring subunit 7311, 6032 may be implemented by the determining subunit 7312, and 6033 may be implemented by the confirming subunit 7313.

As illustrated in FIG. 1, FIG. 6B and FIG. 8, in some embodiments, the processor 12 is further configured to acquire pixel values of a target region O and pixel values of a plurality of edge regions Pn of the infrared image L; determine whether a difference value between an average value of the pixel values of the target region O and an average value of the pixel values of the plurality of edge regions Pn is greater than a predetermined difference value; and if so, determine that the infrared image L is overexposed. That is, 6031, 6032 and 6033 may be implemented by the processor 12.

In detail, as illustrated in FIG. 8, when determining whether the infrared image is overexposed, the processor 12 first acquires pixel values of the target region O and pixel values of the plurality of edge regions Pn of the infrared image L. The target region O is a region located by the target object. The processor 12 may determine the target object based on the focus data or by recognizing the object in the infrared image L (for example, recognizing whether there is a human face), thereby determining the target region O. The edge region Pn is a region around the target region O, for example, the edge regions Pn are 4, that is, the edge region PI, the edge region P2, the edge region P3 and the edge region P4. The plurality of edge regions Pn may also be more, such as 2, 3, 5, etc.

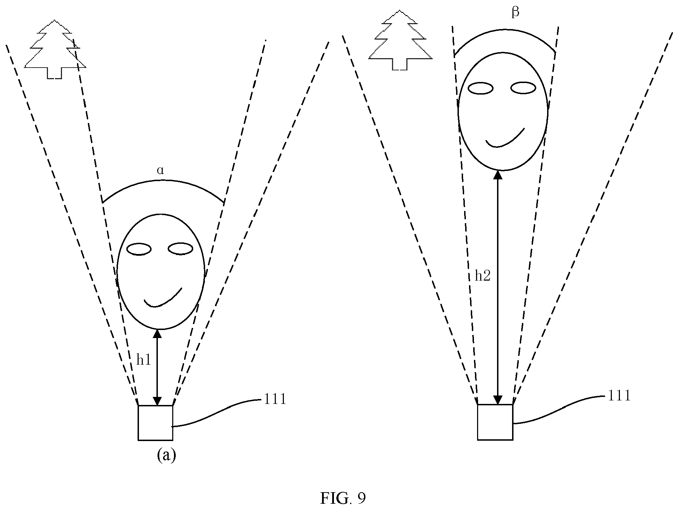

It may be understood that the target region O is generally located at the center of the infrared image L and the plurality of edge regions Pn correspond to the scenes around the target object. In combination with FIG. 9, the target object is a human face. When the human face is close to the light emitter 111 (for example, the distance from the light emitter 111 to the human face in FIG. 9a is h1), most of the laser emitted by the light emitter 111 may be reflected by the human face (for example, the laser in an α angle in the field of view of the light emitter 111 in FIG. 9a is reflected by the human face) and the average value of the pixel values of the target region O of the infrared image L is relatively large since the reflection distance is close and the laser is almost not lost. Moreover, since the reflected laser is fewer and the distance is far in the scene around the human face, the average value of the pixel values of the plurality of edge regions Pn of the infrared image L is small. Therefore, the difference value between the average value of the pixel values of the target region O located by the human face and the average value of the pixel values of the plurality of edge regions Pn is large.

When the human face is far from the light emitter 111 (as illustrated in FIG. 9b, the distance from the light emitter 111 to the human face is h2, h1 < h2), the laser reflected by the human face may be fewer (for example, the laser in an β angle in the field of view of the light emitter 111 in FIG. 9b is reflected by the human face, β<α). Since the distance is far and the loss of the laser during reflection becomes large, the average value of the pixel values of the target region O of the infrared image L is small. And, the laser projected to the scene around the human face may be more and the laser reflected by the surrounding scene may be more, so that the average value of the pixel values of the plurality of edge regions Pn of the infrared image L is large. Therefore, the difference value between the average value of the pixel values of the target region O located by the human face and the average value of the pixel values of the plurality of edge regions Pn is small.

The processor 12 may determine whether the difference value between the average value of the pixel values of the target region O and the average value of the pixel values of the plurality of edge regions Pn is greater than the predetermined difference value, thereby exactly determining whether the infrared image L is overexposed. For example, the predetermined difference value is 150, the average value of the pixel values of the target region O is 210, the average value of the pixel values of the edge region P1 is 30, the average value of the pixel values of the edge region P2 is 35, the average value of the pixel values of the edge region P3 is 35, the average value of the pixel values of the edge region P4 is 40, and the average value of the pixel values of the plurality of edge regions Pn is (30 +35 +35 +40)/4 = 35. Therefore, the difference value between the average value of the pixel values of the target region O and the average value of the pixel values of the plurality of edge regions Pn is 210 - 35 = 175 > 150 and the processor 12 may determine that the current infrared image L is overexposed.

The predetermined difference value may be determined based on a predetermined safety distance, for example, the predetermined difference value is calculated based on the infrared image L acquired when the target object (for example, the human face) is located within the safety distance. When the target object is located within the safety distance, the difference value between the average value of the pixel values of the target region O of the infrared image L and the average value of the pixel values of the plurality of edge regions Pn is greater than the predetermined difference value.

In some embodiments, the safety distance includes a first safety distance and a second safety distance. The processor 12 first generates a depth image based on the infrared image L and the pre-stored reference image to recognize whether there are human eyes in the depth image. The safety distance is set to the first safety distance when human eyes exist. When no human eyes exist, the safety distance is set to the second safety distance. The second safety distance is less than the first safety distance.

In detail, since the tolerance capability of human eyes on the laser is significantly lower than that of the skin of the remaining part of the human body and the damage to people tends to be on the human eyes first, the safety distance to the human eyes shall be set relatively large. Therefore, the processor 12 (illustrated in FIG. 1) may first determine whether human eyes exist in the current scene. When human eyes exist, the safety distance may be set to the larger first safety distance. When the distance to the user is far, it is determined that the user is within the safety distance, thereby reducing the pulse width in time and preventing the laser from damaging human eyes. When no human eyes exist, the safety distance may be set to the smaller second safety distance, thereby preventing the laser from damaging the region beyond the human eyes, reducing the pulse width only when the distance is the second safety distance and improving the precision of the depth image acquired.

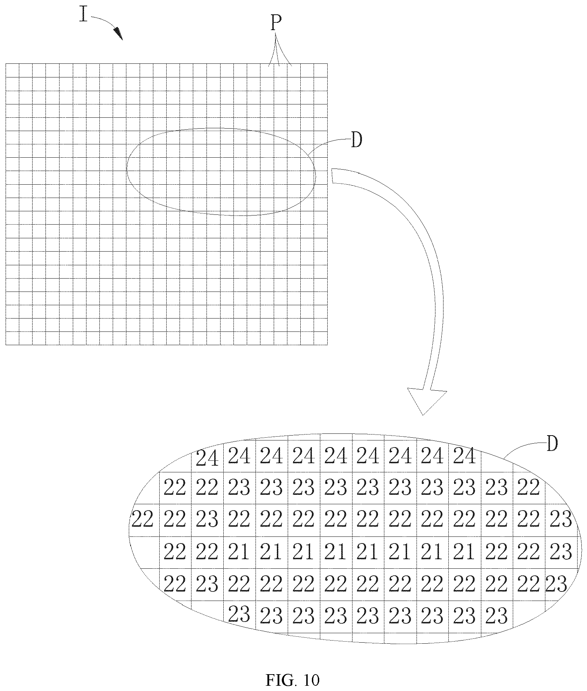

In combination with FIG. 10, it is determined whether human eyes exist in the depth image by matching the depth image with a preset human eye model. When the matching degree reaches a predetermined matching degree, it is regarded as recognizing the human eyes. A depth image I includes a plurality of pixels P and the pixel value of each pixel P (for example, 21, 22, 23, 24) represents a depth of the corresponding position of the pixel P. In a region D of the depth image I, the depth distribution of the object corresponding to the region D is determined to be roughly that the depth of the middle strip region is relatively small and the surrounding depth of the strip region is gradually increased, based on the distribution condition of the pixel values in the region D. The matching degree between the depth distribution condition and the human eye model of the front depth camera 11 reaches a predetermined matching degree. Therefore, it is determined that human eyes exist in the current scene and the region D corresponds to the position of the human eyes in the current scene.

Certainly, in other embodiments, the processor 12 may jointly determine whether human eyes exist in the current scene by the visible light image of the current scene that is acquired by the visible light camera 13. In detail, it is determined whether human eyes exist in the current scene by recognizing feature information in the visible light image. When recognizing that human eyes exist both by the visible light image and the depth information, it is determined that living human eyes exist in the current scene and the situation that there exists only a human eye photo or there is only a human eye mold is excluded.

As illustrated in FIG. 11, in some embodiments, the adjustment method includes the following.

At 1101, a predetermined laser with a first pulse width is emitted to a target object.

At 1102, the laser with the first pulse width, reflected by the target object, is received to generate an infrared image.

At 1103, a depth image of the target object is acquired based on the infrared image and a pre-stored reference image.

At 1104, it is determined whether a proportion of a distortion region where a center misses depth values, of the depth image, to the depth image is greater than a predetermined proportion.

At 1105, it is determined that the distance to the target object is less than the safety distance in response to the proportion of the distortion region to the depth image being greater than the predetermined proportion.

At 1106, a predetermined laser with a second pulse width is emitted to the target object, in which the second pulse width is less than the first pulse width.

As illustrated in FIG. 11 and FIG. 12, in some embodiments, the adjustment apparatus 120 according to embodiments of the disclosure includes a first emitting module 121, a receiving module 122, a determining module 123 and a second emitting module 124. The first emitting module 121 is configured to emit a predetermined laser with a first pulse width to a target object. The receiving module 122 is configured to receive the laser with the first pulse width, reflected by the target object, to generate an infrared image. The determining module 123 is configured to determine whether a distance to the target object is less than a safety distance based on the infrared image. In detail, the determining module 123 includes an acquiring unit 1231, a second determining unit 1232 and a second confirming unit 1233. The first acquiring unit 1231 is configured to acquire a depth image of the target object based on the infrared image and a pre-stored reference image. The second determining unit 1232 is configured to determine whether a proportion of a distortion region where a center misses depth values, of the depth image, to the depth image is greater than a predetermined proportion. The second confirming unit 1233 is configured to determine that the distance to the target object is less than the safety distance in response to the proportion of the distortion region to the depth image being greater than the predetermined proportion. The second emitting module 124 is configured to emit a predetermined laser with a second pulse width to the target object, in which the second pulse width is less than the first pulse width. That is, 1101 may be implemented by the first emitting module 121, 1102 may be implemented by the receiving module 122, 1103 may be implemented by the acquiring unit 1231, 1104 may be implemented by the second determining unit 1232, 1105 may be implemented by the second confirming unit 1233 and 1106 may be implemented by the second emitting module 124.

As illustrated in FIG. 1 and FIG. 11, in some embodiments, the processor 12 is further configured to acquire a depth image of the target object based on the infrared image and a pre-stored reference image; determine whether a proportion of a distortion region where a center misses depth values, of the depth image, to the depth image is greater than a predetermined proportion; and determine that the distance to the target object is less than the safety distance in response to the proportion of the distortion region to the depth image being greater than the predetermined proportion. That is, 1103, 1104 and 1105 are sub blocks of determining whether the distance to the target object is less than the safety distance based on the infrared image and may be implemented by the processor 12.

The contents and detailed implementations of 1101, 1102 and 1106 in FIG. 11 may refer to the descriptions of 301, 302 and 304 in the specification, which is not repeated herein.

It may be understood that, when the target object is too close, most of the laser emitted by the light emitter 111 are reflected by the target object. Since the reflection distance is close and the laser is almost not lost, it easily results in that the target region O in the infrared image is overexposed, the depth value corresponding to the overexposed region may not be acquired, and the region corresponding to the center of the depth region may form the distortion region of missing depth values. Therefore, the processor may determine the overexposure condition of the infrared image based on the proportion of the distortion region to the depth image. When the overexposure of the infrared image is serious, it is determined that the distance to the target object is less than the safety distance.

The processor 12 first acquires the depth image of the target object based on the infrared image and the pre-stored reference image, acquires the number of pixels of which the pixel values may not be acquired in the depth image, and calculates the proportion of the number of pixels of which the pixel values may not be acquired to the total number of pixels. When the proportion is greater than the predetermined proportion (for example, the predetermined proportion is 50%), it may be determined that the overexposure of the infrared image is serious. Correspondingly, it is determined that the distance to the target object is less than the safety distance. In this way, the processor 12 may determine whether the distance to the target object is less than the safety distance based on the size of the distortion region of the infrared image.

As illustrated in FIG. 13A, in some embodiments, the adjustment method includes the following.

At 1301, a predetermined laser with a first pulse width is emitted to a target object.

At 1302, the laser with the first pulse width, reflected by the target object, is received to generate an infrared image.

At 1303, it is determined whether a distance to the target object is less than a safety distance based on the infrared image.

At 1304, if yes, a predetermined laser with a second pulse width is emitted to the target object, in which the second pulse width is less than the first pulse width.

At 1305, a depth image of the target object is acquired based on the infrared image and a pre-stored reference image in response to the distance to the target object being greater than the safety distance.

At 1306, depth information of the target object is acquired based on the depth image.

At 1307, a third pulse width is calculated based on the depth information.

At 1308, a laser with the third pulse width is emitted to the target object.

As illustrated in FIG. 13A and FIG. 14A, in some embodiments, the adjustment apparatus 140 further includes a first emitting module 141, a receiving module 142, a determining module 143, a second emitting module 144, a first acquiring module 145, a second acquiring module 146, a calculating module 147 and a third emitting module 148. The first emitting module 141 is configured to emit a predetermined laser with a first pulse width to a target object. The receiving module 142 is configured to receive the laser with the first pulse width, reflected by the target object, to generate an infrared image. The determining module 143 is configured to determine whether a distance to the target object is less than a safety distance based on the infrared image. The second emitting module 144 is configured to emit a predetermined laser with a second pulse width to the target object in response to the distance to the target object being less than the safety distance, in which the second pulse width is less than the first pulse width. The first acquiring module 145 is configured to acquire a depth image of the target object based on the infrared image and a pre-stored reference image in response to the distance to the target object being greater than the safety distance. The second acquiring module 146 is configured to acquire depth information of the target object based on the depth image. The calculating module 147 is configured to calculate a third pulse width based on the depth information. The third emitting module 148 is configured to emit a laser with the third pulse width to the target object. That is, 1301 may be implemented by the first emitting module 141, 1302 may be implemented by the receiving module 142, 1303 may be implemented by the determining module 143, 1304 may be implemented by the second emitting module 144, 1305 may be implemented by the first acquiring module 145, 1306 may be implemented by the second acquiring module 146, 1307 may be implemented by the calculating module 147 and 1308 may be implemented by the third emitting module 148.

As illustrated in FIG. 1 and FIG. 13A, in some embodiments, the processor 12 is further configured to: acquire a depth image of the target object based on the infrared image and a pre-stored reference image in response to the distance to the target object being greater than the safety distance; acquire depth information of the target object based on the depth image; calculate a third pulse width based on the depth information; and the light emitter 111 is further configured to emit a laser with the third pulse width to the target object. That is, 1305, 1306, 1037 and 1308 may be implemented by the processor 12.

The contents and detailed implementations of 1301, 1302, 1303 and 1304 in FIG. 13A may refer to the descriptions of 301, 302, 303 and 304 in the specification, which is not repeated here.

In detail, when the processor 12 determines that the infrared image is not exposed, it is determined that the distance to the target object is greater than or equal to the safety distance. At this time, the processor 12 may generate the depth image based on the infrared image and the reference image. Since the infrared image is not exposed, depth information of most pixels of the depth image may be acquired. The processor 12 may acquire depth information of the target object based on the depth image. For example, when the target object is the human face, the processor 12 first compares the depth image with a preset human face model to determine a region where the face is located after recognizing the face, and calculates an average value of the depth values corresponding to all pixels in the region where the human face is located, and takes the average value as depth information of the face, or takes the minimum value of the depth values corresponding to all pixels in the region where the human face is located as depth information of the face.

It may be understood that, when the distances to the target object are different, the pulse widths required for acquiring clear depth images are also different. Therefore, after acquiring depth information of the target object, the processor 12 calculates the third pulse width based on the depth information, the third pulse width matching the depth information. When the distance to the target object is the safety distance (for example, 100 mm), the third pulse width is 1 ms; when the distance to the target object is 100 mm to 200 mm, the third pulse width is 1.5 ms; and when the distance to the target object is greater than 200 mm, the third pulse width is 2 ms. In this way, the processor 12 emits the laser with the corresponding third pulse width based on the depth information of the target object. The farther the distance is, the wider the corresponding pulse width is, thereby improving the acquiring accuracy of the depth image of the target object farther away from the distance.

In some embodiments, the processor 12 first acquires previous and subsequent frames of depth images based on the previous and subsequent frames of infrared images, then determines a relative motion speed of the target object based on the previous and subsequent frames of depth images, and determines whether the distance to the target object in the subsequent frame is less than the safety distance based on the current distance and the motion speed of the target object.

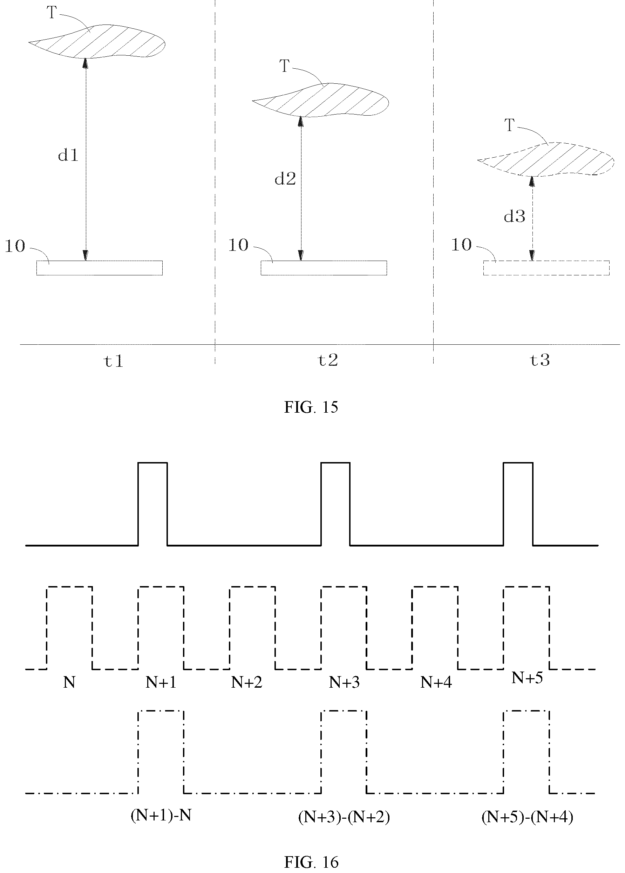

In detail, as can be seen from FIG. 15, when the test laser is emitted, the target object T and the terminal 10 are in a relative motion state, for example, the terminal 10 is not moving and the target object T (for example, a person or object) is moving towards the terminal 10, or the target object T (for example, a photographed person or object) is not moving and the user may hold the terminal 10 to move to the target object T (for example, the photographed person or object). The relative distance between the target object T and the terminal 10 is constantly changing. The processor 12 first generates previous and subsequent frames of depth images based on the previous and subsequent frames of infrared images, then calculates a relative motion speed of the terminal 10 relative to the target object T based on the first depth information d1 of the target object in the previous frame of depth image, the second depth information d2 of the target object T in the subsequent frame of depth image, the time t1 of emitting the laser corresponding to the previous frame of depth image and the time t2 of emitting the laser corresponding to the subsequent frame of depth image, for example, a relative motion speed k is acquired by d1 -d2 = k (t2 -t1). The previous frame and the subsequent frame may be two adjacent frames and also may be two frames separated by a plurality of frames, which is not limited herein. The calculation method of the first depth information d1 and the second depth information d2 is mentioned in the above embodiments: the way of acquiring by the processor 12 depth information of the target image is the same, which is not repeated herein.

The processor 12 calculates third depth information d3 of the target object T at t3 based on t3 of emitting (actually not emitted) by the light emitter 111 a next frame of laser (the waveform of the laser may be different from the waveform of the test laser) and the relative motion speed, in which d3-d2=k(t3-t2) or d3-d1=k(t3-t1), and takes the depth information d3 as the distance to the target object T at 03 to determine whether the distance to the target object T is less than the safety distance. If so at 03, the processor 12 controls the light emitter 111 to emit the laser with the second pulse width at t3 so as to adjust the pulse width before the target object T is within the safety distance, to further prevent the laser from damaging the user.

As illustrated in FIG. 13A and FIG. 13B, in some embodiments, 1305: acquiring the depth image of the target object based on the infrared image and the pre-stored reference image specifically includes the following.

At 13051, the predetermined laser with the first pulse width is emitted to the target object at a first operating frequency.

At 13052, the laser with the first pulse width, reflected by the target object, is received at a second operating frequency to generate the infrared image, the second operating frequency being greater than the first operating frequency.

At 13053, a first image containing the laser with the first pulse width and a second image not containing the laser with the first pulse width in the infrared image are determined.

At 13054, a depth image is generated based on the first image, the second image and the reference image.

As illustrated in FIG. 13B and FIG. 14B, in some embodiments, the first acquiring module 145 includes an emitting unit 1451, a receiving unit 1452, a third determining unit 1453 and a generating unit 1454. The emitting unit 1451 is configured to emit the laser with the first pulse width to the target object at a first operating frequency. The receiving unit 1452 is configured to receive the laser with the first pulse width, reflected by the target object, at a second operating frequency to generate the infrared image, the second operating frequency being greater than the first operating frequency. The third determining unit 1453 is configured to determine a first image containing the laser with the first pulse width and a second image not containing the laser with the first pulse width in the infrared image. The generating unit 1454 is configured to generate the depth image based on the first image, the second image and the reference image. That is, 13051 may be implemented by the emitting unit 1451, 13052 may be implemented by the receiving unit 1452, 13053 may be implemented by the third determining unit 1453 and 13054 may be implemented by the generating unit 1454.

As illustrated in FIG. 1 and FIG. 13B, in some embodiments, the light emitter 111 is further configured to emit the predetermined laser with the first pulse width to the target object at a first operating frequency; the light receiver 112 is further configured to receive the laser with the first pulse width, reflected by the target object, at a second operating frequency to generate the infrared image, the second operating frequency being greater than the first operating frequency; and the processor 12 is further configured to determine a first image containing the laser with the first pulse width and a second image not containing the laser with the first pulse width in the infrared image and generate the depth image based on the first image, the second image and the reference image. That is, 13051, 13052, 13053 and 13054 may be sub blocks of acquiring the depth image of the target object based on the infrared image and the pre-stored reference image. 13051 may be implemented by the light emitter 111, 13052 may be implemented by the light receiver 112, and 13053 and 13054 may be implemented by the processor 12.

In detail, the light emitter 111 and the light receiver 112 work at different operating frequencies. The light emitter 111 emits the predetermined laser with the first pulse width to the target object at the first operating frequency. The light receiver 112 receives the laser with the first pulse width, reflected by the target object, at the second operating frequency to generate the infrared image, the second operating frequency being greater than the first operating frequency. For example, as illustrated in FIG. 16, a solid line represents a timing of emitting the laser by the light emitter 111, a dotted line represents a timing of acquiring infrared images by the light receiver112 and the number of frames of infrared images, and a dot dash line represents the number of frames of speckle images formed by the infrared laser emitted only by the light emitter 111 based on the first image and the second image. In FIG. 16, the solid line, the dotted line and the dot dash line are illustrated from top to bottom in sequence, in which the second operating frequency may be twice the first operating frequency. Referring to the solid line and dotted line parts in FIG. 16, the processor 12 controls the light receiver 112 to receive infrared light (hereinafter referred to as ambient infrared light) in the environment first when the light emitter 111 does not project the laser, to acquire an N^{th} frame of infrared image (at this time, referred to as a first image and also referred to as a background image); subsequently, the processor 12 controls the light receiver 112 to receive ambient infrared light and an infrared laser emitted by the light emitter 111 when the light emitter 111 projects the laser, to acquire an (N +1)^{th} frame of infrared image (at this time, referred to as a second image and also referred to as an interference speckle image); subsequently, the processor 12 controls the light receiver 112 to receive ambient infrared light when the light emitter 111 does not project the laser, to acquire an (N +2)^{th} frame of infrared image (at this time, the first image), and so on. The light receiver 112 alternately acquires the first image and the second image.

It should be noted that, the processor 12 may control the light receiver 12 to acquire the second image first, and then acquire the first image, and execute the acquisition of infrared images alternately based on the sequence. In addition, a multiple relationship between the second operating frequency and the first operating frequency is merely an example. In other embodiments, the multiple relationship between the second operating frequency and the first operating frequency may further be triple, quadruple, quintuple, sextuple, etc.

The processor 12 may distinguish each infrared image to determine whether the infrared image is the first image or the second image. After the processor 12 acquires at least one frame of first image and at least one frame of second image, depth information may be calculated based on the first image, the second image and the reference image. In detail, since the first image is acquired when the light emitter 111 does not project the laser, the light forming the first image only includes the ambient infrared light. Since the second image is acquired when the light emitter 111 projects the laser, the light forming the second image simultaneously include the ambient infrared light and the infrared laser emitted by the light emitter 111. The processor 12 may remove the portion formed by the ambient infrared light from the second image based on the first image, thereby acquiring the image only formed by the infrared laser emitted by the light emitter 111 (that is, the speckle image formed by the infrared laser).

It may be understood that, the ambient light includes infrared light with the same wavelength as the laser emitted by the light emitter 111 (for example, containing 940 nm ambient infrared light). When the light receiver 112 acquires images, the part of this infrared light may also be received by the light receiver 112. When the brightness of the scene is high, the proportion of the ambient infrared light to the light received by the light receiver 112 may increase, resulting in not obvious laser speckles in the image, thus affecting the calculation of the depth image. In the embodiments, the light emitter 111 and the light receiver 112 work at different operating frequencies, and the light receiver 112 may acquire the first image formed only by the ambient infrared light and the second image formed by the ambient infrared light and the infrared laser projected by the light emitter 111, and remove the image portion formed by the ambient infrared light from the second image based on the first image, so that laser speckles may be distinguished, depth information may be calculated by the acquired image formed only by the infrared laser projected by the light emitter 111 and laser speckle matching may not be affected, which may avoid a part or all of missing of depth information, thereby improving the accuracy of depth information.

As illustrated in FIG. 1 and FIG. 2, in some embodiments, the processor determines a working state of the light emitter 111 in the acquisition time based on the acquisition time of each frame of acquired image, adds an image type for each frame of acquired image based on the working state and distinguish the first image and the second image based on the image types.

Each time the processor 12 receives one frame of acquired image from the light receiver 112, the processor 12 may add an image type (stream_type) for the acquired image in order to facilitate distinguishing the first image from the second image based on the image type in the subsequent processing. In detail, during acquiring images by the light receiver 112, the processor 12 may monitor a working state of the light emitter 111 in real time via the I2C bus. Each time the processor 12 receives one frame of acquired image from the light receiver 112, the processor 12 acquires an acquisition time of the acquired image first, and determines whether the working state of the light emitter 111 at the acquisition time of the acquired image is projecting the laser or not projecting the laser based on the acquisition time of the acquired image, and adds an image type for the acquired image based on the determining result. The acquisition time of the acquired image may be a start time, an end time, any time between the start time and the end time of each frame of image acquired by the light receiver 112. In this way, each frame of acquired image may be implemented corresponding to the working state (projecting the laser or not projecting the laser) of the light emitter 111 during the acquisition of the frame of acquired image, and the type of the acquired image may be accurately distinguished. In one example, the structure of the image type (stream type) is illustrated in Table 1:

**Table 1**

| stream_type | | |
|---|---|---|
| stream | light | |
| 0 | 0 | 0 |
| 0 | 0 | 1 |

When stream in Table 1 is 0, the data stream at this time is an image formed by infrared light and/or infrared laser. When light is 00, the data stream at this time is acquired without any device projecting the infrared light and/or the infrared laser (only the ambient infrared light). The processor 12 may add a 000 image type for the acquired image to identify the acquired image as the first image. When light is 01, the data stream at this time is acquired when the laser projector 111 projects the infrared laser (both the ambient infrared light and the infrared laser). The processor 12 may add a 001 image type for the acquired image to identify the acquired image as the second image. The processor 12 may distinguish the image type of the acquired image based on stream _ type.

As illustrated in FIG. 1, in some implementations, the processor 12 includes a first storage area, a second storage area and a logic subtraction circuit. The logic subtraction circuit is coupled to the first storage area and the second storage area. The first storage area is configured to store the first image. The second storage area is configured to store the second image. The logic subtraction circuit is configured to process the first image and the second image to acquire the speckle image formed by the infrared laser. In detail, the logic subtraction circuit reads the first image from the first storage area, reads the second image from the second storage area, and performs subtraction processing on the first image and the second image to acquire the speckle image formed by the infrared laser after the first image and the second image are acquired. The logic subtraction circuit is further coupled to a depth calculating module (for example, an application specific integrated circuit ASIC for calculating a depth) in the processor 12 and sends the speckle image formed by the infrared laser to the depth calculating module. The depth calculation module calculates depth information based on the speckle image formed by the infrared laser and the reference image.

Referring to FIG. 17, the disclosure further provides a non-temporary computer-readable storage medium 200 including computer-readable instructions 202. The computer-readable instructions 202 are coupled to the processor 300. When the computer-readable instructions 202 are executed by the processor 300, the processor 300 is caused to execute the adjustment method as described in the any above embodiment. The processor 300 may be the processor 12 in FIG. 1 and FIG. 2.

For example, in combination with FIG. 3, when the computer-readable instructions 202 are executed by the processor 300, the processor 300 is caused to execute the following.

At 301, a predetermined laser with a first pulse width is emitted to a target object.

At 302, the laser with the first pulse width, reflected by the target object, is received to generate an infrared image.

At 303, it is determined whether a distance to the target object is less than a safety distance based on the infrared image.

At 304, if yes, a predetermined laser with a second pulse width is emitted to the target object, in which the second pulse width is less than the first pulse width.

In the above descriptions, descriptions with reference to terms "some embodiments", "one embodiment", "schematic embodiment", "example", "specific example" or "some examples" mean specific features, structures, materials or characteristics described in combination with the implementation or example are included in at least one implementation or example of the disclosure. The schematic representations of the above terms do not have to be the same implementation or example. Moreover, specific features, structures, materials or characteristics described may be combined in any one or more implementations or examples in a suitable manner.

In addition, the terms "first" and "second" are only for describing purposes and are not to be construed as indicating or implying relative importance or implicitly indicating the number of technical features indicated. Thus, features limiting "first" and "second" may explicitly or implicitly include at least one of the features. In the description of the disclosure, "a plurality of' means at least two, for example, two, three, unless otherwise expressly and specifically stated.

Even though embodiments of the disclosure have been illustrated and described above, it may be understood by those skilled in the art that various changes, modifications, substitutions and alterations may be made for the embodiments without departing from the principles and spirit of the disclosure, and the scope of the disclosure is defined by claims and their equivalents.

## Claims

1. An adjustment method, comprising: emitting a predetermined laser with a first pulse width to a target object; receiving the laser with the first pulse width, reflected by the target object, to generate an infrared image; determining whether a distance to the target object is less than a safety distance based on the infrared image; and emitting a predetermined laser with a second pulse width to the target object in response to the distance to the target object being less than the safety distance, the second pulse width being less than the first pulse width.

2. The method of claim 1, wherein, determining whether the distance to the target object is less than the safety distance based on the infrared image, comprises: determining whether the infrared image is overexposed; and determining that the distance to the target object is less than the safety distance in response to the infrared image being overexposed.

3. The method of claim 2, wherein, determining whether the infrared image is overexposed, comprises: acquiring pixel values of a target region and pixel values of a plurality of edge regions of the infrared image; determining whether a difference value between an average value of the pixel values of the target region and an average value of the pixel values of the plurality of edge regions is greater than a predetermined difference value; and determining that the infrared image is overexposed in response to the difference value between the average value of the pixel values of the target region and the average value of the pixel values of the plurality of edge regions being greater than the predetermined difference value.

4. The method of claim 1, wherein, determining whether the distance to the target object is less than the safety distance based on the infrared image, comprises: acquiring a depth image of the target object based on the infrared image and a pre-stored reference image; determining whether a proportion of a distortion region where a center misses depth values, of the depth image, to the depth image is greater than a predetermined proportion; and determining that the distance to the target object is less than the safety distance in response to the proportion of the distortion region to the depth image being greater than the predetermined proportion.

5. The method of claim 1, further comprising: acquiring a depth image of the target object based on the infrared image and a pre-stored reference image in response to the distance to the target object being greater than the safety distance; acquiring depth information of the target object based on the depth image; calculating a third pulse width based on the depth information; and emitting a laser with the third pulse width to the target object.

6. The method of claim 5, wherein, acquiring the depth image of the target object based on the infrared image and the pre-stored reference image, comprises: emitting the laser with the first pulse width to the target object at a first operating frequency; receiving the laser with the first pulse width, reflected by the target object, at a second operating frequency to generate the infrared image, the second operating frequency being greater than the first operating frequency; determining a first image containing the laser with the first pulse width and a second image not containing the laser with the first pulse width in the infrared image; and generating the depth image based on the first image, the second image and the reference image.

7. An adjustment apparatus, comprising: a first emitting module, configured to emit a predetermined laser with a first pulse width to a target object; a receiving module, configured to receive the laser with the first pulse width, reflected by the target object, to generate an infrared image; a determining module, configured to determine whether a distance to the target object is less than a safety distance based on the infrared image; and a second emitting module, configured to emit a predetermined laser with a second pulse width to the target object in response to the distance to the target object being less than the safety distance, the second pulse width being less than the first pulse width.

8. The apparatus of claim 7, wherein, the determining module comprises a first determining unit and a first confirming unit, the first determining unit 731 is configured to determine whether the infrared image is overexposed and the first confirming unit 732 is configured to determine that the distance to the target object is less than the safety distance in response to the infrared image being overexposed.

9. The apparatus of claim 8, wherein, the first determining unit 731 comprises an acquiring subunit 7311, a determining subunit 7312 and a confirming subunit 7313; the first acquiring subunit 7311 is configured to acquire pixel values of a target region and pixel values of a plurality of edge regions of the infrared image; the determining subunit 7312 is configured to determine whether a difference value between an average value of the pixel values of the target region and an average value of the pixel values of the plurality of edge regions is greater than a predetermined difference value; and the confirming subunit 7313 is configured to determine that the infrared image is overexposed in response to the difference value between the average value of the pixel values of the target region and the average value of the pixel values of the plurality of edge regions being greater than the predetermined difference value.

10. The apparatus of claim 7, wherein, the determining module 123 comprises an acquiring unit 1231, a second determining unit 1232 and a second confirming unit 1333; the first acquiring unit 1231 is configured to acquire a depth image of the target object based on the infrared image and a pre-stored reference image, the second determining unit 1232 is configured to determine whether a proportion of a distortion region where a center misses depth values, of the depth image, to the depth image is greater than a predetermined proportion, and the second confirming unit 1233 is configured to determine that the distance to the target object is less than the safety distance in response to the proportion of the distortion region to the depth image being greater than the predetermined proportion.

11. The apparatus of claim 7, further comprising a first acquiring module 145, a second acquiring module 146, a calculating module 147 and a third emitting module 148; the first acquiring module 145 is configured to acquire a depth image of the target object based on the infrared image and a pre-stored reference image in response to the distance to the target object being greater than the safety distance; the second acquiring module 146 is configured to acquire depth information of the target object based on the depth image; the calculating module 147 is configured to calculate a third pulse width based on the depth information; and the third emitting module 148 is configured to emit a laser with the third pulse width to the target object.

12. The apparatus of claim 11, wherein, the first acquiring module 145 comprises an emitting unit 1451, a receiving unit 1452, a third determining unit 1453 and a generating unit 1454; the emitting unit 1451 is configured to emit the laser with the first pulse width to the target object at a first operating frequency; the receiving unit 1452 is configured to receive the laser with the first pulse width, reflected by the target object, at a second operating frequency to generate the infrared image, the second operating frequency being greater than the first operating frequency; the third determining unit 1453 is configured to determine a first image containing the laser with the first pulse width and a second image not containing the laser with the first pulse width in the infrared image; and the generating unit 1454 is configured to generate the depth image based on the first image, the second image and the reference image.

13. A terminal, comprising a depth camera and a processor, wherein, the depth camera comprises a light emitter and a light receiver; the light emitter is configured to emit a predetermined laser with a first pulse width to a target object; the light receiver is configured to receive the laser with the first pulse width, reflected by the target object, to generate an infrared image; and the processor is configured to determine whether a distance to the target object is less than a safety distance based on the infrared image, and control the light emitter to emit a predetermined laser with a second pulse width to the target object in response to the distance to the target object being less than the safety distance, the second pulse width being less than the first pulse width.

14. The terminal of claim 13, wherein, the processor is further configured to: determine whether the infrared image is overexposed; and determine that the distance to the target object is less than the safety distance in response to the infrared image being overexposed.

15. The terminal of claim 14, wherein, the processor is further configured to: acquire pixel values of a target region and pixel values of a plurality of edge regions of the infrared image; determine whether a difference value between an average value of the pixel values of the target region and an average value of the pixel values of the plurality of edge regions is greater than a predetermined difference value; and determine that the infrared image is overexposed in response to the difference value between the average value of the pixel values of the target region and the average value of the pixel values of the plurality of edge regions being greater than the predetermined difference value.

16. The terminal of claim 13, wherein, the processor is further configured to: acquire a depth image of the target object based on the infrared image and a pre-stored reference image; determine whether a proportion of a distortion region where a center misses depth values, of the depth image, to the depth image is greater than a predetermined proportion; and determine that the distance to the target object is less than the safety distance in response to the proportion of the distortion region to the depth image being greater than the predetermined proportion.

17. The terminal of claim 13, wherein, the processor is further configured to: acquire a depth image of the target object based on the infrared image and a pre-stored reference image in response to the distance to the target object being greater than the safety distance; acquire depth information of the target object based on the depth image; and calculate a third pulse width based on the depth information; and the light emitter is configured to emit a laser with the third pulse width to the target object.

18. The apparatus of claim 17, wherein, the light emitter is further configured to emit the laser with the first pulse width to the target object at a first operating frequency; the light receiver is configured to receive the laser with the first pulse width, reflected by the target object, at a second operating frequency to generate the infrared image, the second operating frequency being greater than the first operating frequency; and the processor is configured to determine a first image containing the laser with the first pulse width and a second image not containing the laser with the first pulse width in the infrared image; and generate the depth image based on the first image, the second image and the reference image.

19. The terminal of claim 13, further comprising a housing, the depth camera and the processor being mounted on the housing.

20. A non-transitory computer-readable storage medium including computer-readable instructions, wherein a processor is caused to execute the method of any of claims 1 to 6 in response to the computer-readable instructions are executed by the processor.
